# EUROPÄISCHE PATENTSCHRIFT

(11) **EP 1 240 236 B1**
(45) Veröffentlichungstag und Bekanntmachung des Hinweises auf die Patenterteilung: **01.09.2004**
(21) Anmeldenummer: 00993409.2
(22) Anmeldetag: 06.12.2000
(51) Int. Cl.: C08G 65/26, C08G 18/48

(54) **VERFAHREN ZUR HERSTELLUNG VON POLYETHERALKOHOLEN**
METHOD FOR PRODUCTION OF POLYETHER ALCOHOLS
PROCEDE DE PRODUCTION DE POLYETHER-ALCOOLS

(30) Priorität: 14.12.1999 DE 19960148
(43) Veröffentlichungstag der Anmeldung: 18.09.2002
(73) Patentinhaber: BASF AKTIENGESELLSCHAFT, 67056 Ludwigshafen (DE)
(72) Erfinder: HARRE, Kathrin, 01109 Dresden (DE); HÖPPNER, Gerd, 01987 Schwarzheide (DE); GROSCH, Georg, Heinrich, 67098 Bad Dürkheim (DE); BAUER, Stephan, 49179 Ostercappeln (DE); WINKLER, Jürgen, 01987 Schwarzheide (DE); PAREDIS, Els, B-2520 Ranst (BE); LORENZ, Reinhard, 48366 Laer (DE); ROTERMUND, Inge, 01990 Ortrand (DE)
(86) Internationale Anmeldenummer: PCT/EP2000/012276
(87) Internationale Veröffentlichungsnummer: WO 2001/044347

(56) Entgegenhaltungen:
- DD-A- 237 178
- DD-A- 275 695
- US-A- 5 792 829
- DATABASE WPI Section Ch, Week 200019 Derwent Publications Ltd., London, GB; Class A25, AN 2000-217948 XP002165639 & JP 2000 044505 A (ASAHI DENKA KOGYO KK), 15. Februar 2000 (2000-02-15)

## Beschreibung

Die Erfindung betrifft Polyetherole, ihre Herstellung sowie ihre Verwendung zur Herstellung von Polyurethanen.

Polyetheralkohole werden in großen Mengen zur Herstellung von Polyurethanen eingesetzt. Ihre Herstellung erfolgt zumeist durch katalytische Anlagerung von niederen Alkylenoxiden, insbesondere Ethylenoxid und Propylenoxid, an H-funktionelle Starter. Als Katalysatoren werden zumeist basische Metallhydroxide oder Salze verwendet, wobei das Kaliumhydroxid die größte praktische Bedeutung hat.

Für viele technische Anwendungsgebiete werden Polyetheralkohole eingesetzt, deren Polyetherketten aus mehr als einem Alkylenoxid aufgebaut sind. In der Technik werden zumeist niedere Alkylenoxide, wie Ethylenoxid, Propylenoxid und Butylenoxid eingesetzt, wobei Ethylenoxid und Propylenoxid die größte praktische Bedeutung haben. Die Anlagerung kann dabei nach der sogenannten blockweisen Fahrweise erfolgen, das heißt, es wird jeweils nur ein Alkylenoxid gleichzeitig angelagert. Die so hergestellten Polyetheralkohole weisen Polyetherketten auf, in denen nacheinander Bereiche mit Segmenten aus einem Alkylenoxid angeordnet sind. Eine weitere Möglichkeit der Herstellung von Polyetheralkoholen aus mindestens zwei Alkylenoxiden besteht in der sogenannten statistischen Anlagerung der Alkylenoxide, auch als Heteric bezeichnet. Dabei werden die Alkylenoxide in Form einer Mischung zu dem Reaktionsgemisch dosiert. Diese Mischungen enthalten üblicherweise die Alkylenoxide in einem konstanten Mengenverhältnis. Diese Art der Dosierung der Alkylenoxide wird im folgenden als klassische Statistik bezeichnet. Unter dem Mengenverhältnis wird hierbei der Quotient aus der Menge der Alkylenoxide verstanden, wobei es unerheblich ist, ob es sich bei der "Menge" um das Gewicht oder die Stoffmenge, ausgedrückt z.B. in der Einheit mol, der Alkylenoxide handelt.

Die genannten Verfahren zur Herstellung von Polyetheralkoholen weisen Nachteile auf, die sich insbesondere bei der Verwendung von Katalysatoren mit einer hohen katalytischen Aktivität, bei denen die Anlagerung der Alkylenoxide mit einer hohen Geschwindigkeit abläuft, bemerkbar machen. So kommt es bei der Verwendung von Multimetallcyanidkatalysatoren, auch als DMC-Katalysatoren bezeichnet, zur Herstellung von Polyetheralkoholen bei der Anlagerung von mehreren Alkylenoxiden häufig zu Qualitätsproblemen bei den Polyetheralkoholen. Bei der blockweisen Anlagerung der Alkylenoxide kommt es häufig zu einer sehr hohen Molgewichtsverteilung und zu Trübungen im Polyetheralkohol, bei der statistischen Fahrweise tritt häufig ein für viele Anwendungen zu hoher Gehalt an Ethylenoxidsegmenten am Kettenende auf. Bei der Anlagerung von endständigen Ethylenoxid-Blöcken an Propoxylate oder Blöcke aus statistischen Gemischen von Alkylenoxiden kommt es zur Bildung von sehr hochmolekularen Ethoxylaten, die einen großen Teil des zugeführten Ethylenoxid binden. Diese Polyole haben für die Verarbeitung unerwünscht hohe Viskositäten. Das hat zudem zur Folge, daß zum Erzielen der für Reaktivpolyole gewünschten hohen Gehalte an endständigem Ethylenoxid der Gehalt an Ethylenoxid im Polyetheralkohol sehr hoch sein muß, wodurch die Hydrophilie der Polyether stark zunimmt. Selbst in den Fällen, in denen eine Verarbeitung dieser Polyether zum Polyurethanschaum möglich ist, entstehen in der Folge stark hydrolyseanfällige Schäume. Ein weiteres Problem ergibt sich oft daraus, daß in dem Polyol bei der Verarbeitung zur Polyol-Komponente, die dann in der Urethanreaktion eingesetzt wird, verschiedene organische oder anorganische Stoffe wie z.B. Wasser, Glyzerin, Katalysatoren, die übliche Rezepturbestandteile bei der Herstellung von Polyurethanen sind, gelöst werden müssen. Daher sind Art der Blöcke, Blocklängen und Blockverteilungen häufig engen Grenzen unterworfen.

In WO 97/27,236 (EP 876,416) wird ein Polyetheralkohol für den Einsatz in hochelastischen Weichschäumen beschrieben, der aus einem Propylenoxid-Innenblock, der höchstens 35 Gew.-% der gesamten Alkylenoxidmenge umfaßt, und einem oder mehreren externen Blöcken aus Ethylenoxid und Propylenoxid mit einem Gehalt von mindestens 2 Gew.-% Ethylenoxid besteht, wobei der Innenblock zumindest teilweise und die externen Blöcke vollständig mittels Multimetallcyanikatalysatoren katalysiert werden. Derartige Polyetheralkohole sind jedoch zumeist wesentlich reaktiver als handelsübliche, basisch katalysierte Polyetheralkohole und können somit nicht ohne weiteres in bekannte Polyurethansysteme eingearbeitet werden. Außerdem weisen die so hergestellten Polyetheralkohole meist Trübungen auf.

Die geschilderten Probleme zeigen sich besonders bei Polyurethanschäumen, insbesondere bei Weichschäumen, und am deutlichsten bei Blockweichschäumen. Insbesondere kommt es zu Rißbildungen im Schaum und zu einer Verschlechterung der mechanischen Eigenschaften der Schaumstoffe.

Bei Verwendung von Multimetallcyanidkatalysatoren lassen sich hohe Gehalte an endständigen primären Hydroxyl-Gruppen mittels Ethylenoxid-Endblöcken nur um den Preis hoher Hydrophilie und extrem hoher Viskositäten einstellen.

In DD-A-275 695 wird ein Verfahren zur Herstellung von Polyetheralkoholen beschrieben, bei dem Ethylenoxid und Propylenoxid in einer statistischen Mischung angelagert werden, wobei innerhalb der Statistik der Anteil der Alkylenoxide in der Mischung gleichmäßig zueinander steigt bzw. fällt. Auf Grund der geringen katalytischen Aktivität der als Katalysator eingesetzten Kalilauge erfolgt der Einbau der Alkylenoxide in die Polyetherkette jedoch nicht in der dosierten Weise, sondern wird durch Rückvermischung mit vorher dosiertem, aber noch nicht angelagertem Alkyxlenoxid verändert. Dadurch lassen sich die gewünschten Blockaufbaustrukturen nur eingeschränkt realisieren, und die Eigenschaften der so hergestellten Polyetheralkohole unterscheiden sich teilweise nur wenig von denen der mittels klassischer Statistik hergestellten Polyetheralkohole. Dieser Mangel ließe sich zwar durch langsamere Dosierung beheben, dies würde aber zu unwirtschaftlich langen Chargenlaufzeiten führen. Die Verwendung von nicht hochaktiven Katalysatoren, wie Kalilauge, führt während der Synthese zu unerwünschten Nebenreaktionen, die sowohl Verluste an Alkylenoxid verursachen als auch die Produktqualität schmälern. So lassen sich auch Jodzahlen kleiner 0,4 nicht erreichen, was für ein immer noch merkliches Niveau an Nebenreaktionen spricht. Besonders die Bildung von ungesättigten Bestandteilen führt zum Verlust von Hydroxyl-Funktionalität, wodurch die in der Polyurethanreaktion benötigte Polyetherolmenge steigt. Auch Bildung von färbenden oder Geruchsgebenden Nebenprodukten beeinträchtigen die derart hergestellten Polyetherole.

Außerdem muß der Ausgangspunkt und der Endpunkt der in DD-A-275 695 beschriebenen Dosierung jeweils ein reines Alkylenoxid sein. Dadurch lassen sich die in DD-A-275 695 beschriebenen statistischen Blöcke nicht immer vorteilhaft mit klassischen statistischen Blöcken kombinieren. So sind keine Polyole mit mittleren Gehalten an primären Hydroxylgruppen zugänglich. Weiterhin enthalten Polyetheralkohole, die nach dieser Fahrweise hergestellt wurden und mit Ethylenoxid beginnen, immer Kettenabschnitte, die aus reinem Ethylenoxid bestehen. Diese führen zu unerwünscht hoher Hydrolyseanfälligkeit, zu hohen Viskositäten und zu Trübungsanfälligkeit des Polyethers. Wenn diese Statistiken mit Ethylenoxid enden, machen sich die Rückvermischungseffekte unangenehm bemerkbar, so daß am Kettenende immer auch etwas Propylenoxid zu finden ist.

Aufgabe der Erfindung war es, Polyetheralkohole bereitzustellen, die durch katalytische Anlagerung von mindestens zwei Alkylenoxiden an H-funktionelle Startsubstanzen herstellbar sind, keine Trübungen aufweisen, für die Verarbeitung günstige Viskostäten besitzen und problemlos zu Polyurethanen, insbesondere Polyurethan-Weichschaumstoffen, verarbeitet werden können. Zudem sollte ier Gehalt an Alkylenoxiden am Ende der Polyetherkette gezielt einstellbar sein. Hochmolekulare Flanken, wie sie bei der bei der Anlagerung von Alkylenoxiden nach üblicher Blockfahrweisen bei der Verwendung von DMC-Katalysatoren zur Herstellung der Polyetheralkohole auftreten, sollen vermieden werden. Zudem sollen lange Umschalt- und Druckstabilisierungsphasen, die üblicherweise zwischen den einzelnen Blöcken notwendig sind, vermieden werden.

Die Aufgabe konnte überraschenderweise gelöst werden durch ein Verfahren zur Herstellung von Polyetheralkoholen mittels katalytischer Anlagerung von mindestens zwei Alkylenoxiden an H-funktionelle Startsubstanzen, wobei im Verlaufe der Anlagerung der Alkylenoxide an die Startsubstanz mindestens eine gemeinsame Dosierung von zwei Alkylenoxiden erfolgt, bei der im Verlaufe der Dosierung das Mengenverhältnis der Alkylenoxide im Gemisch verändert wird.

Diese Art der Dosierung wird im folgenden als dynamische Fahrweise bezeichnet.

Unter dem Begriff "Mengenverhältnis" wird hierbei, wie oben beschrieben, der Quotient der Mengen der während der dynamischen Fahrweise dosierten Alkylenoxide verstanden.

Gegenstand der Erfindung ist demzufolge ein Verfahren zur Herstellung von Polyetheralkoholen durch katalytische Anlagerung von mindestens zwei Alkylenoxiden an H-funktionelle Startsubstanzen, dadurch gekennzeichnet, daß als Katalysator mindestens eine Multimetallcyanidverbindung eingesetzt sowie im Verlaufe der Anlagerung der Alkylenoxide an die Startsubstanz mindestens ein Oxyalkylenblock eingebaut wird, bei dem eine gemeinsame Dosierung von mindestens zwei Alkylenoxiden erfolgt, wobei während der gemeinsamen Dosierung das Mengenverhältnis der Alkylenoxide zueinander im dosierten Gemisch verändert wird.

Gegenstand der Erfindung sind weiterhin die nach dem genannten Verfahren hergestellten Polyetheralkohole, deren Verwendung zur Herstellung von Polyurethanen, insbesondere Polyurethan-Weichschaumstoffen, und die unter Verwendung der Polyetheralkohole hergestellten Polyurethane.

Die Anderung des Mengenverhältnisses der Alkylenoxide kann dabei linear oder nichtlinear erfolgen. Unter einer linearen Änderung des Mengenverhältnisses der Alkylenoxide wird verstanden, daß sich das Mengenverhältnis der Alkylenoxide in einer gleichen Zeiteinheit um den gleichen Wert ändert. Beim Auftragen des Mengenverhältnisses der Alkylenoxide gegen die Zeit ergibt sich in diesem Falle eine Gerade. Unter einer nichtlinearen Änderung des Mengenverhältnisses der Alkylenoxide wird verstanden, daß der Wert für die Änderung des Mengenverhältnisses in einer gleichen Zeiteinheit unterschiedlich ist. Beim Auftragen des Mengenverhältnisses der Alkylenoxide gegen die Zeit ergibt sich in diesem Falle eine Kurve, die sich nicht durch eine Gerade beschreiben läßt. Diese Kurve kann auch einen exponentiellen Verlauf haben.

Die dynamische Fahrweise kann so gestaltet werden, daß die Gesamtmenge des in einer Zeiteinheit dosierten Alkylenoxids während der gesamten dynamischen Fahrweise konstant ist, es ist jedoch auch möglich, die Gesamtmenge des in einer Zeiteinheit dosierten Alkylenoxids im Verlaufe der dynamischen Fahrweise zu ändern. Dies kann zum einen erfolgen, indem die Menge des einen Alkylenoxids konstant bleibt und die Menge des anderen Alkylenoxids verändert wird, es ist jedoch auch möglich, die Menge beider Alkylenoxide zu verändern, wobei, wie ausgeführt, das Mengenverhältnis der Alkylenoxide zueinander sich verändern muß.

Die dynamische Fahrweise kann so durchgeführt werden, daß der Gehalt eines der Alkylenoxide in ihrem Verlauf kontinuierlich gesenkt wird, bis ein gewünschter Gehalt dieses Alkylenoxids im Gemisch erreicht oder nur noch das andere Alkylenoxid zudosiert wird. Es ist auch möglich, die dynamische Fahrweise so durchzuführen, daß der Gehalt eines der Alkylenoxide im Gemisch zunächst kontinuierlich erhöht und danach, sofort oder auch nach einer Phase mit konstantem Mengenverhältnis an Alkylenoxiden, kontinuierlich gesenkt wird. Zu Beginn und zum Ende der dynamischen Fahrweise können jeweils eines oder beide Alkylenoxide im dosierten Gemisch vorliegen.

In der einfachsten Ausführungsform des erfindungsgemäßen Verfahrens besteht die gesamte Polyetherkette aus einem nach der dynamischen Fahrweise angelagerten Block.

Vorzugsweise wird jedoch nur ein Teil der Polyetherkette nach der dynamischen Fahrweise und das restliche Alkylenoxid nach der bekannten blockweisen oder statistischen Fahrweise angelagert. In die Polyetherkette können dabei ein oder mehrere Alkylenoxidblöcke, die nach der dynamischen Fahrweise angelagert wurden, eingebaut sein.

Die Alkylenoxidblöcke, die nach der dynamischen Fahrweise angelagert wurden, können am Anfang, am Ende oder in der Mitte der Polyetherkette angeordnet sein.

Bei der Anlagerung eines Alkylenoxidblockes nach der dynamischen Fahrweise ist es möglich, unmittelbar an diesen Block mindestens einen nur aus einem Alkylenoxid bestehenden Block anzulagern. Dies wird vorzugsweise so durchgeführt, daß im zudosierten Gemisch während der dynamischen Fahrweise der Gehalt des Alkylenoxids, das nicht zum Aufbau des nachfolgenden Blocks verwendet wird, kontinuierlich soweit gesenkt wird, daß sein Gehalt im Gemisch schließlich Null beträgt, und danach das andere Alkylenoxid allein weiterdosiert wird. Es ist jedoch auch möglich, daß am Ende der dynamischen Fahrweise noch beide Alkylenoxide im Gemisch vorliegen und danach die Dosierung eines der Alkylenoxide beendet und nur noch das andere Alkylenoxid dosiert wird.

Es ist auch möglich, unmittelbar an den Alkylenoxidblock, der nach der dynamischen Fahrweise angelagert wurde, mindestens einen Block aus zwei Alkylenoxiden nach der klassischen statistischen Fahrweise anzulagern. Hierbei ist es möglich, die dynamische Fahrweise bis zu dem Mengenverhältnis der Alkylenoxide zu führen, in dem der nachfolgende statistische Block angelagert wird, und in diesem Mengenverhältnis die Alkylenoxide weiter zu dosieren, oder aber die dynamische Dosierung abzubrechen und danach die Alkylenoxide in dem Verhältnis, in dem sie in dem nachfolgenden Block angelagert werden sollen, weiter zu dosieren.

Ebenso ist es möglich, vor dem Alkylenoxidblock, der nach der dynamischen Fahrweise angelagert wurde, mindestens einen Block aus nur einem Alkylenoxid oder zwei Alkylenoxiden in klassischer statistischer Fahrweise anzulagern. Auch hier kann das Mengenverhältnis der Alkylenoxide am Ende dieses Blockes gleich oder verschieden von dem Mengenverhältnis der Alkylenoxide zu Beginn der dynamischen Fahrweise sein.

Wie oben ausgeführt, ist es möglich, den Block in dynamischer Fahrweise unmittelbar an die Startsubstanz anzulagern. Dabei kann dieser Block zu Beginn der Dosierung, wie oben beschrieben, ein oder beide Alkylenoxide enthalten und nach jeder der beschriebenen Varianten der dynamischen Fahrweise dosiert werden. Daran kann sich, wie beschrieben, mindestens ein reiner Alkylenoxidblock oder mindestens ein Alkylenoxidblock nach klassischer statistischer Anlagerung anschließen. Die Polyetherkette kann auch noch mindestens einen weiteren Alkylenoxidblock, der nach der dynamischen Fahrweise angelagert wurde, enthalten.

Weiterhin kann auch am Kettenende ein Alkylenoxidblock, der nach der dynamischen Fahrweise angelagert wurde, eingebaut werden. Auch bei diesem Block sind alle beschriebenen Ausgestaltungen der dynamischen Fahrweise möglich. So kann dieser Block am Anfang ein oder beide Alkylenoxide enthalten, und am Ende der Dosierung kann noch eines oder beide Alkylenoxide dosiert werden.

Bei Alkylenoxidblöcken, die nach der statistischen Fahrweise angelagert wurden und die sich in der Mitte der Polyetherkette befinden, sind ebenfalls alle der beschriebenen Ausgestaltungen möglich. Sie können sich also an einen Alkylenoxidblock aus nur einem Alkylenoxid oder einen klassischen statistischen Block mit der gleichen oder einer anderen Zusammensetzung wie zu Beginn der dynamischen Fahrweise anschließen und zu Beginn der Dosierung nur das vorher allein dosierte Alkylenoxid oder ein Gemisch der zur Dosierung des dynamischen Blocks verwendeten Alkylenoxide enthalten. Am Ende des dynamischen Blocks kann ebenfalls nur ein oder beide Alkylenoxide vorliegen. Danach kann ebenfalls ein reiner Alkylenoxidblock oder ein klassischer statistischer Alkylenoxidblock angelagert werden, wobei dieser Block an seinem Anfang das gleiche oder ein anderes Mengenverhältnis der Alkylenoxide zueinander haben kann, als am Ende des dynamischen Blocks vorliegt.

Übliche Polyetheralkohole für Anwendungen im Polyurethan-Formweichschaum oder in Polyurethan-Elastomeren bestehen zumeist aus einem Innenblock aus Propylenoxid oder einem klassischen statistischen Gemisch aus Ethylenoxid und Propylenoxid. Daran schließt sich ein reiner Ethylenoxid-Block an, der benötigt wird, um einen hohen Gehalt an primären Hydroxyl-Gruppen einzustellen. Bei der Verwendung Multimetallcyanidkatalysatoren entstehen bei dieser Fahrweise hochviskose, trübe Polyether mit niedrigen Gehalten an primären Hydroxyl-Gruppen. Der Gehalt an primären Hydroxylgruppen kann zwar durch Anlagerung längerer Ethylenoxid-Ketten erhöht werden, jedoch steigt damit auch die Hydrophilie der Polyetheralkohole unerwünscht stark an. Wird jedoch am Ende der Polyetherkette ausgehend von einem klassischen statistischen Block oder einem Block aus nur einem Alkylenoxid ein Block in dynamischer Fahrweise mit einem erhöhten Ethylenoxid-Gehalt am Ende der Dosierung angelagert, so lassen sich die gewünschten Gehalte an primären Hydroxyl-Gruppen einstellen, ohne daß am Kettenende lange Ethylenoxid-Blöcke angelagert werden müssen.

Zur Anwendung von Polyolen im Blockweichschaum werden dagegen vorzugsweise Polyetheralkohole mit Gehalten an primären Hydroxyl-Gruppen <10 % eingesetzt. Andererseits sollte ein gewisser Gehalt an Ethylenoxid in der Kette vorhanden sein, da Ethylenoxid in der Polyetherkette die Löslichkeit von Wasser und verschiedenen anderen für die Polyurethan-Herstellung notwendigen Zusatzstoffen im Polyol verbessert und außerdem preisgünstiger als Propylenoxid ist. Zudem ist ein gewisser Gehalt an Ethylenoxid in der äußeren Polyetherkette günstig, um Geschlossenzelligkeit im Schaum zu vermeiden. Bei der klassischen statistischen Fahrweise kann der Gehalt an Ethylenoxid jedoch gewisse Grenzen nicht überschreiten, da zu viel Ethylenoxid am Ende der Kette zu einem unerwünschten erhöhten Gehalt an primären Hydroxyl-Gruppen führt. Wird jedoch ein Gemisch aus Alkylenoxiden nach der dynamischen Fahrweise angelagert, bei dem der Gehalt an Ethylenoxid gegen Ende der Kette durch Abmagerung seines Gehaltes im Alkylenoxidgemisch gesenkt wird, so lassen sich hohe Gehalte an Ethylenoxid in die Kette einbauen, ohne daß es zum unerwünschten Effekt der Erhöhung der Reaktivität durch primäre Hydroxyl-Gruppen kommt. Auch ein zusätzlicher kurzer Block aus reinem Propylenoxid am Ende der Kette ist möglich.

Besonders vorteilhaft zur Durchführung des erfindungsgemäßen Verfahrens geeignet sind Multimetallcyanidkatalysatoren, da sie eine sehr hohe Aktivität aufweisen und dadurch gewährleisten, daß das dosierte Alkylenoxid sofort in die Kette eingebaut wird.

Diese haben üblicherweise die allgemeine Formel (I)

M¹ ₐ[M²(CN)_{b}(A)_{c}]_{d} · fM¹ _{g}Xₙ · h(H2O) · eL (I)

ist, wobei
- M¹: ein Metallion, ausgewählt aus der Gruppe, enthaltend Zn2+, Fe2+, Co3+, Ni2+, Mn2+, Co2+, Sn2+, Pb2+, Mo4+, Mo6+, Al3+, V4+, V5+, Sr2+, W4+, W6+, Cr2+, Cr3+, Cd2+,
- M²: ein Metallion, ausgewählt aus der Gruppe, enthaltend Fe2+, Fe3+, Co2+, Co3+, Mn2+, Mn3+, V4+, V5+, Cr2+, Cr3+, Rh3+, Ru2+, Ir3+
bedeuten und M¹ und M² gleich oder verschieden sind,
- A: ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,
- X: ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,
- L: ein mit Wasser mischbarer Ligand, ausgewählt aus der Gruppe, enthaltend Alkohole Aldehyde, Ketone, Ether, Polyether Ester, Harnstoffe, Amide, Nitrile, und Sulfide,
bedeuten, sowie
- a, b, c, d, g und n: so ausgewählt sind, daß die Elektroneutralität der Verbindung gewährleistet ist, und
- e: die Koordinationszahl des Liganden, eine gebrochene oder ganze Zahl größer gleich 0
- f: eine gebrochene oder ganze Zahl größer oder gleich 0
- h: eine gebrochene oder ganze Zahl größer oder gleich 0 bedeuten.

Die Herstellung dieser Verbindungen erfolgt nach allgemein bekannten Verfahren, indem man die wäßrige Lösung eines wasserlöslichen Metallsalzes mit der wäßrigen Lösung einer Hexacyanometallatverbindung, insbesondere eines Salzes oder einer Säure, vereinigt und dazu während oder nach der Vereinigung einen wasserlöslichen Liganden gibt.

Der Katalysator wird zumeist in einer Menge von kleiner 1 Gew.-%, vorzugsweise in einer Menge von kleiner 0,5 Gew.-%, besonders bevorzugt in einer Menge von kleiner 1000 ppm und insbesondere in einer Menge von kleiner 500 ppm, jeweils bezogen auf das Gewicht des Polyetheralkohols, eingesetzt.

Als Alkylenoxide für das erfindungsgemäße Verfahren können Ethylenoxid, 1,2-Epoxypropan (Propylenoxid), 1,2-Methyl-2-ethoxypropan,1,2-Epoxybutan, 2,3-Epoxybutan (Butylenoxid), 1,2-Methyl-3-ethoxybutan, 1,2-Epoxypentan, 1,2-Methyl-3-ethoxypentan, 1,2-Epoxyhexan, 1,2-Epoxyheptan, 1,2-Epoxyoctan, 1,2-Epoxynonan, 1,2-Epoxydecan, 1,2-Epoxyundecan, 1,2-Epoxydodecan, Styroloxid, 1,2-Epoxycyclopentan,1,2-Epoxycyclohexan, (2,3-Epoxypropyl)-benzol, Vinyloxiran, 3-Phenoxy-1,2-epoxypropan, 2,3-Epoxymethylether, 2,3-Epoxylethylether, 2,3-Epoxylisopropylether, 2,3-Epoxyl-1-propanol, (3,4-Epoxybutyl)stearat, 4,5-Epoxypentylacetat, 2,3-Epoxylpropanmethacrylat, 2,3-Epoxylpropanacrylat, Gylcidylbutyrat, Metylglycidat, Ethyl-2,3-epoxybutanoat, 4-(Trimethylsilyl)butan-1,2-epoxid, 4-(Triethylsilyl)butan-1,2-epoxid, 3-(Perfluoromethyl)-propenoxid, 3-(Perfluoroethyl)-propenoxid, 3-(Perfluorobutyl)propenoxid, 4-(2,3-Epoxypropy)morpholin, 1-(Oxiran-2-ylmethyl)pyrrolidin-2-on.

Bevorzugt eingesetzt werden Ethylenoxid, Propylenoxid und Butylenoxid, besonders bevorzugt werden Ethylenoxid und Propylenoxid.

Als H-funktionelle Startsubstanzen werden insbesondere 2- bis 8-funktionelle Alkohole, eingesetzt. Zur Herstellung von Polyetheralkoholen für den Einsatz in Polyurethan-Weichschaumstoffen, die besonders vorteilhaft nach dem erfindungsgemäßen Verfahren hergestellt werden können, kommen insbesondere zwei- und dreifunktionelle Alkohole, beispielsweise Ethylenglykol, Diethylenglykol, Triethylenglykol, Propylenglykol, Dipropylenglykol, Tripropylenglykol, Glyzerin, Trimethylolpropan oder Pentaerythrit zum Einsatz. Die genannten Alkohole können einzeln oder in beliebigen Gemischen untereinander eingesetzt werden.

Zur Durchführung des erfindungsgemäßen Verfahrens wird zu Beginn der Umsetzung die Startsubstanz vorgelegt und, soweit notwendig, Wasser und andere leicht flüchtige Verbindungen entfernt. Dies erfolgt zumeist durch Destillation, vorzugsweise unter Vakuum oder unter Anwendung von Vakuumstripping mit Trägergasen. Dabei kann der Katalysator bereits in der Startsubstanz vorhanden sein, es ist jedoch auch möglich, den Katalysator erst nach der Behandlung der Startsubstanz zuzusetzen. Bei der letztgenannten Variante wird der Katalysator thermisch weniger belastet. Vor der Dosierung der Alkylenoxide ist es üblich, den Reaktor zu inertisieren, um unerwünschte Reaktionen der Alkylenoxide mit Sauerstoff zu vermeiden. Danach erfolgt die Dosierung der Alkylenoxide, wobei die Anlagerung in der oben beschriebenen Weise durchgeführt wird. Die Anlagerung der Alkylenoxide erfolgt zumeist bei Drücken im Bereich von 0,01 bar und 10 bar und Temperaturen im Bereich von 50 bis 200°C, vorzugsweise 90 bis 150°C.

Die Reaktion kann kontinuierlich oder batchweise durchgeführt werden. Nach Beendigung der Umsetzung werden die nicht umgesetzten Monomeren und leichtflüchtige Verbindungen aus der Reaktionsmischung entfernt, üblicherweise mittels Destillation. Bei Verwendung von DMC-Katalysatoren kann der Katalysator prinzipiell im Polyetheralkohol verbleiben, er kann jedoch auch entfernt werden, beispielsweise durch Behandlung mit Oxidationsmitteln und Abtrennung der gebildeten unlöslichen Verbindungen.

Wie ausgeführt, können die nach dem erfindungsgemäßen Verfahren hergestellten Polyetheralkohole vorzugsweise zur Herstellung von Polyurethanen, und hierbei insbesondere zur Herstellung von Polyurethan-Weichschaumstoffen, eingesetzt werden. Die Herstellung der Polyurethane erfolgt nach an sich bekannten Verfahren durch Umsetzung der erfindungsgemäßen Polyetheralkohole, gegebenenfalls im Gemisch mit anderen Verbindungen mit mindestens zwei mit Isocyanatgruppen reaktiven Wasserstoffatomen, mit Polyisocyanaten. Diese Umsetzung wird vorzugsweise in Anwesenheit der üblichen Katalysatoren, Treibmittel sowie Hilfs- und Zusatzstoffe durchgeführt. Die nach dem erfindungsgemäßen Verfahren hergestellten Polyetheralkohole können dabei einzeln oder im Gemisch mit anderen H-funktionellen Verbindungen eingesetzt werden.

Als Polyisocyanate kommen hierbei alle Isocyanate mit zwei oder mehreren Isocyanatgruppen im Molekül zum Einsatz. Dabei können sowohl aliphatische Isocyanate, wie Hexamethylendiisocyanat (HDI) oder Isophorondiisocyanat (IPDI), oder vorzugsweise aromatische Isocyanate, wie Toluylendiisocyanat (TDI), Diphenylmethandiisocyanat (MDI) oder Mischungen aus Diphenylmethandiisocyanat und Polymethylenpolyphenylenpolyisocyanaten (Roh-MDI) verwendet werden. Es ist auch möglich, Isocyanate einzusetzen, die durch den Einbau von Urethan-, Uretdion-, Isocyanurat-, Allophanat-, Uretonimin- und anderen Gruppen modifiziert wurden, sogenannte modifizierte Isocyanate.

Als Verbindungen mit mindestens zwei mit Isocyanatgruppen reaktiven Gruppen, die im Gemisch mit den erfindungsgemäßen Polyetheralkoholen eingesetzt werden, können Amine, Mercaptane, vorzugsweise jedoch Polyole verwendet werden. Unter den Polyolen haben die Polyetherpolyole und die Polyesterpolyole die größte technische Bedeutung. Die zur Herstellung von Polyurethanen eingesetzten Polyetherpolyole werden zumeist durch basisch katalysierte Anlagerung von Alkylenoxiden, insbesondere Ethylenoxid und/oder Propylenoxid, an H-funktionelle Startsubstanzen hergestellt. Polyesterpolyole werden zumeist durch Veresterung von mehrfunktionellen Carbonsäuren mit mehrfunktionellen Alkoholen hergestellt.

Zu den Verbindungen mit mindestens zwei mit Isocyanatgruppen reaktiven Gruppen gehören auch die Kettenverlängerer und/oder Vernetzer, die gegebenenfalls mit eingesetzt werden können. Dabei handelt es sich um mindestens zweifunktionelle Amine und/oder Alkohole mit Molekulargewichten im Bereich von 60 bis 400.

Als Treibmittel wird zumeist Wasser und/oder bei der Reaktionstemperatur der Urethanreaktion gasförmige, gegenüber den Ausgangsstoffen der Polyurethane inerte Verbindungen, sogenannte physikalisch wirkende Treibmittel, sowie Gemische daraus eingesetzt. Als physikalisch wirkende Treibmittel werden Kohlenwasserstoffe mit 2 bis 6 Kohlenstoffatomen, halogenierte Kohlenwasserstoffe mit 2 bis 6 Kohlenstoffatomen, Ketone, Acetale, Ether, Inertgase wie Kohlendioxid und/oder Edelgase eingesetzt.

Als Katalysatoren werden insbesondere Aminverbindungen und/oder Metallverbindungen, insbesondere Schwermetallsalze und/oder metallorganische Verbindungen, eingesetzt. Insbesondere werden als Katalysatoren tertiäre Amine und/oder organische Metallverbindungen verwendet.

Als Hilfsmittel und/oder Zusatzstoffe werden beispielsweise Trennmittel, Flammschutzmittel, Farbstoffe, Füllstoffe und/oder Verstärkungsmittel verwendet.

In der Technik ist es üblich, alle Einsatzstoffe mit Ausnahme der Polyisocyanate zu einer sogenannten Polyolkomponente zu vermischen und diese mit den Polyisocyanaten zum Polyurethan umzusetzen.

Die Herstellung der Polyurethane kann nach dem sogenannten oneshot-Verfahren oder nach dem Prepolymerverfahren erfolgen. Die Polyurethan-Weichschaumstoffe können sowohl Blockschäume als auch Formschäume sein.

Eine Übersicht über die Einsatzstoffe für die Herstellung von Polyurethanen sowie die dazu angewendeten Verfahren findet sich beispielsweise im Kunststoffhandbuch, Band 7 "Polyurethane", Carl-Hanser-Verlag München Wien, 1. Auflage 1966, 2. Auflage 1983 und 3. Auflage 1993.

Die erfindungsgemäßen Polyetheralkohole weisen eine sehr enge Molgewichtsverteilung und überraschenderweise keinerlei Trübung auf. Auf Grund der sehr hohen Reaktionsgeschwindigkeit bei der Anlagerung der Alkylenoxide mittels DMC-Katalysatoren ist die Anlagerung der Alkylenoxide an die Startsubstanz kontrolliert möglich. Insgesamt kann durch die dynamische Fahrweise die Zahl derjenigen Blöcke verringert werden, bei denen am Ende des Blockes ein Wechsel des Alkylenoxids oder des Mengenverhältnisses der Alkylenoxide in einer nachfolgenden klassischen Statistik notwendig ist. Dadurch ergibt sich bei der Herstellung ein Zeitvorteil, da die zwischen den Blöcken durch den Wechsel der Alkylenoxiddosierung meist notwendige Dosierpause und Stabilisierungsphase entfällt.

Die Erfindung soll durch die nachstehenden Beispiele näher beschrieben werden:

### Beispiel 1

1000 ml starksaurer Ionenaustauscher (K2431, Fa. Bayer) wurden mit zweimal mit 450 g HCl (37 % HCl-Gehalt) regeneriert und danach mit Wasser solange gewaschen bis der Ablauf neutral war. Danach gab man eine Lösung von 80,8 g K₃[Co(CN)₆] in 250 ml Wasser auf die Austauschersäule. Die Säule wurde danach solange eluiert bis der Auslauf wieder neutral war. Das Co:K-Verhältnis im gewonnen Eluat war größer 10:1. Die 1269 g Eluat wurden auf 40°C temperiert und anschließend unter Rühren mit einer Lösung von 80,0 g Zn(II)-Acetat-Dihydrat in 240 g Wasser versetzt. Anschließend wurden zur Suspension 276,4 g tert.-Butanol zugegeben und die Suspension bei 40°C weitere 30 min gerührt. Danach wurde der Feststoff abgesaugt und auf dem Filter mit 300 ml tert.-Butanol gewaschen. Der so behandelte Festkörper wurde bei Raumtemperatur getrocknet.

### Beispiel 2

Auf eine Säule mit frisch regenerierten 5000 ml stark saurer Ionenaustauscher (K2431, Fa. Bayer) gab man eine Lösung von 400 g K₃[Co(CN)₆] in 1300 ml Wasser. Die Säule wurde danach solange eluiert bis der Auslauf wieder neutral war. Das Co:K-Verhältnis im gewonnen Eluat war größer 10:1. 5000 g Eluat wurden auf 40°C temperiert und anschließend unter Rühren (Schraubenrührer, U=500/min) mit einer Lösung von 396 g Zn(II)-Acetat-Dihydrat in 1400 g Wasser versetzt. Anschließend wurden zur Suspension 1400 g tert.-Butanol zugegeben und die Suspension bei 40°C weitere 30 min gerührt. Danach wurde der Feststoff abgesaugt. Der Feststoff wurde anschließend mit 4000 ml tert.-Butanol aufgeschlämmt und erneut abfiltriert. Der so behandelte Festkörper wurde bei 50°C und 25 mbar Vakuum getrocknet.

### Beispiel 3

7 1 stark saurer Ionenaustauscher, der sich in der Natriumform befand, (Amberlite 252 Na, Fa. Rohm&Haas) wurden in eine Austauschersäule (Länge 1 m, Volumen 7,7 1) gefüllt. Der Ionenaustauscher wurde anschließend die H-Form überführt, indem 10 %ige Salzsäure mit einer Geschwindigkeit von 2 Bettvolumen pro Stunde 9 Stunde lang über die Austauschersäule gefahren wurde, bis der Na-Gehalt im Austrag kleiner 1 ppm betrug. Anschließend wurde der Ionenaustauscher mit Wasser neutral gewaschen.

Der regenierte Ionenaustauscher wurde nun benutzt, um eine im wesentlichen alkalifreie Hexacyanocobaltatsäure herzustellen. Dazu wurde eine 0,24 molare Lösung von Kaliumhexacyanocobaltat in Wasser mit einer Geschwindigkeit von einem Bettvolumen pro Stunde über den Austauscher gefahren. Nach 2,5 Bettvolumen wurde von der Kaliumhexacyanocobaltat-Lösung auf Wasser gewechselt. Die erhaltenen 2,5 Bettvolumen hatten im Mittel einen Gehalt von Hexacyanocobaltatsäure von 4,5 Gew.-% und Alkaligehalte kleiner 1 ppm.

Die im weiteren verwendete Hexacyanocobaltatsäure-Lösung wurde entsprechend mit Wasser verdünnt.

2432,9 g der wässrigen Hexacyanocobaltsäure-Lösung (Cobaltgehalt 6 g/l) wurden auf 40°C temperiert und unter Rühren (Blattrührer, U=500 min⁻¹) 120 ml des Tensids Pluronic® PE 6100 (BASF Aktiengesellschaft, Coblockpolymeres aus Propylenoxid und Ethylenoxid) zugegeben und gelöst. Anschließend wurde unter Rühren (Blattrührer, U=500 min⁻¹) eine Lösung von 108,8 g Zn(II)-Acetat-Dihydrat in 400 g Wasser zugegeben. Anschließend wurden zur Suspension 400 g tert.-Butanol gegeben. Die Suspension wurde bei 40°C weitere 30 min gerührt. Danach wurde der Feststoff abgesaugt. Der feuchte Filterkuchen (330 g) wurde mit 2000 ml Wasser mittels Ultraturrax innerhalb von 5 min dispergiert.

### Beispiel 4: (Vergleich)

Die Synthese wurde in einem gereinigten und getrockneten 1-1-Rührautoklaven durchgeführt. Es wurden 80 g propoxyliertes Glyzerin mit einem Molekulargewicht von 400 g/mol in den Rührkessel gegeben und mit 250 ppm des Katalysators aus Beispiel 3 versetzt. Der Kesselinhalt wurde mit Stickstoff inertisiert und insgesamt 1 Stunde bei 125°C im Vakuum behandelt. Bei 115°C wurde innerhalb von 1 Stunde 820 g eines Gemischs aus 68 Gew.-% Propylenoxid und 32 Gew.-% Ethylenoxid zudosiert. Es wurde weitere 15 min gerührt und bei 105°C und 8 mbar entgast. Die Aufarbeitung des Produkts erfolgte durch Filtration. Das Polyol war trüb.
Hydroxylzahl: 33,9 mg KOH/g;
Viskosität bei 25°C: 4966 mPas
Gehalt an primären Hydroxylgruppen: 23 %
M_{w}: 15990 g/mol
D: 2,98 (Dispersität, Quotient aus Mw und Mn)

### Beispiel 5: (Vergleich)

Die Synthese wurde in einem gereinigten und getrockneten 1-1-Rührautoklaven durchgeführt. Es wurden 80 g propoxyliertes Glyzerin mit einem Molekulargewicht von 400 g/mol in den Rührkessel gegeben und mit 250 ppm des Katalysators aus Beispiel 3 versetzt. Der Kesselinhalt wurde mit Stickstoff inertisiert und insgesamt 1 Stunde bei 125°C im Vakuum behandelt. Bei 115°C wurde innerhalb von 45 min 560 g Propylenoxid und anschließend innerhalb von 45 min 260 g Ethylenoxid zudosiert. Es wurde weitere 15 Minuten gerührt und bei 105°C und 10 mbar entgast. Die Aufarbeitung des Produkts erfolgte durch Filtration. Das Polyol war weiß und dickflüssig.
Hydroxylzahl: 37,4 mg KOH/g;
Viskosität bei 25°C: 1482 mPas
Gehalt an primären Hydroxylgruppen: 27 %
Mw: n.nwb., da Probe unlöslich

### Beispiel 6

Die Synthese wurde in einem gereinigten und getrockneten 10-1-Rührautoklaven durchgeführt. Es wurden 424,8 g propoxyliertes Glyzerin mit einem Molekulargewicht von 400 g/mol in den Rührkessel gegeben und mit 1,505 g des Katalysators aus Beispiel 3 (250 ppm bezogen auf den Feststoffgehalt) versetzt. Der Kesselinhalt wurde mit Sickstoff inertisiert und insgesamt 1,5 Stunden bei 110°C im Vakuum behandelt. Bei 125°C wurden 3,5 bar Sickstoff zugegeben und anschließend innerhalb von 3 Stunden insgesamt 3853,5 g Propylenoxid und 571,1 g Ethylenoxid zudosiert. Dabei blieb der Ethylenoxid-Gehalt im Gemisch bei 12,8 %, bis 87,5 % der Gesamtmenge an Alkylenoxid dosiert waren und wurde dann linear auf 0 % abgesenkt. Die Aufarbeitung des Produkts erfolgte durch Filtration. Das Polyol war klar.
Hydroxylzahl: 35,0 mg KOH/g;
Viskosität bei 25°C: 845 mPas;
Gehalt an primären Hydroxylgruppen: 5,3 %
M_{w} 4107 g/mol
D: 1,13

### Beispiel 7

Die Synthese wurde in einem gereinigten und getrockneten 10-1-Rührautoklaven durchgeführt. Es wurden 423,4 g propoxyliertes Glyzerin mit einem Molekulargewicht von 400 g/mol in den Rührkessel gegeben und mit 1,50 g des Katalysators aus Beispiel 2 (312 ppm bezogen auf den Feststoffgehalt) versetzt. Der Kesselinhalt wurde mit Stickstoff inertisiert und insgesamt 1,5 Stunden bei 110°C im Vakuum behandelt. Bei 125°C wurden 3,5 bar Stickstoff zugegeben und anschließend innerhalb von 3 Stunden insgesamt 3819,2 g Propylenoxid und innerhalb von 2 Stunden 43 min 52 s 566,0 g Ethylenoxid zudosiert. Die Dosiergeschwindigkeit des Propylenoxids wurde dabei linear kontinuierlich innerhalb von 60 min von 0 g/h auf 1465,1 g/h gesteigert, 1 Stunde 7 Minuten 52 Sekunden konstant gehalten und in 36 Minuten auf 1759 g/Stunde linear kontinuierlich erhöht und anschließend 16 Minuten 8 Sekunden konstant gehalten. Zeitgleich mit Beginn der Dosierung des Propylenoxids wurde die Dosiergeschwindigkeit des Ethylenoxids in 60 Minuten von 0 auf 293,2 g/h gesteigert, 1 Stunde 7 Minuten und 52 Sekunden konstant gehalten und dann in 36 Minuten kontinuierlich linear auf 0 g/h abgesenkt. Der Startdruck betrug 3576 mbar, der Enddruck 7067 mbar. Es wurde weitere 25 min gerührt und anschließend 20 min bei 105°C und 6 mbar entgast. Die Aufarbeitung des Produkts erfolgte durch Filtration. Das Polyol war klar.
Hydroxylzahl: 35,1 mg KOH/g;
Viskosität bei 25°C: 817 mPas;
Gehalt an primären Hydroxylgruppen: 4,3 %
M^{w}: 4111 g/mol
D:1,1

### Beispiel 8: (Vergleich)

Die Synthese wurde in einem gereinigten und getrockneten 1-1-Rührautoklaven durchgeführt. Es wurden 80g propoxyliertes Glyzerin mit einem Molekulargewicht von 400 g/mol in den Rührkessel gegeben und mit 250 ppm des Katalysators aus Beispiel 3 versetzt. Der Kesselinhalt wurde mit Stickstoff inertisiert und insgesamt 1 Stunde bei 125°C im Vakuum behandelt. Bei 115°C wurde erst 650 g Propylenoxid, anschließend 118 g Ethylenoxid und adanach 98 g Propylenoxid zudosiert. Es wurde weitere 15 min gerührt und bei 105°C und 6 mbar entgast. Die Aufarbeitung des Produkts erfolgte durch Filtration. Das Polyol war trüb und derart hochviskos, daß eine Viskositätsmessung bei 25°C nicht möglich war.
Hydroxylzahl: 35,4 mg KOH/g;
Viskosität bei 75°C: 95,8 mPas
Gehalt an primären Hydroxylgruppen: 7 %
D: 1,24

### Beispiel 9: (Vergleich)

Die Synthese wurde in einem gereinigten und getrockneten 1-1-Rührautoklaven durchgeführt. Es wurden 80 g propoxyliertes Glyzerin mit einem Molekulargewicht von 400 g/mol in den Rührkessel gegeben und mit 250 ppm des Katalysators aus Beispiel 3 versetzt. Der Kesselinhalt wurde mit Stickstoff inertisiert und insgesamt 1 Stunde bei 125°C im Vakuum behandelt. Bei 115°C wurde erst ein Gemisch aus 651 g Propylenoxid und 118 g Ethylenoxid und danach 98 g Propylenoxid zudosiert. Es wurde weitere 15 min gerührt und bei 105°C und 6 mbar entgast. Die Aufarbeitung des Produkts erfolgte durch Filtration. Das Polyol war trüb. Hydroxylzahl: 36,2 mg KOH/g ;
Viskosität bei 25°C: 719 mPas
Gehalt an primären Hydroxylgruppen: 6 %
D: 1,23

### Beispiel 10

Die Synthese wurde in einem gereinigten und getrockneten 10-1-Rührautoklaven durchgeführt. Es wurden 424,8 g propoxyliertes Glyzerin mit einem Molekulargewicht von 400 g/mol in den Rührkessel gegeben und mit 1,505 g des Katalysators aus Beispiel 2 (312 ppm bezogen auf den Feststoffgehalt) versetzt. Der Kesselinhalt wurde mit Stickstoff inertisiert und insgesamt 1 Stunde bei 110°C im Vakuum behandelt. Bei 125°C wurden 3,5 bar Stickstoff zugegeben und anschließend innerhalb von 3 Stunden insgesamt 3853,5 g Propylenoxid und nach 1 Stunde Dosierung des Propylenoxids innerhalb von 2 Stunde 571,1 g Ethylenoxid zudosiert. Die Dosiergeschwindigkeit des Propylenoxids wurde dabei linear kontinuierlich innerhalb von 60 Minuten von 0 g/h auf 1759,9 g/h gesteigert, dann innerhalb von 2 Stunde auf 352,0 g/h abgesenkt. 1 Stunde nach Beginn der Dosierung des Propylenoxids wurde die Dosiergeschwindigkeit des Ethylenoxids in 2 Stunden von 0 auf 352,0 g/h gesteigert. Der Startdruck betrug 3525 mbar, der Enddruck 7280 mbar. Es wurde weitere 30 Minuten gerührt und anschließend 35 Minuten bei 105°C und 10 mbar entgast. Die Aufarbeitung des Produkts erfolgte durch Filtration. Das Polyol war klar.
Hydroxylzahl: 35,8 mg KOH/g; V₂₅:767 mPas;
Gehalt an primären Hydroxylgruppen: 46 %
M_{w}: 3890 g/mol
D: 1,1

### Beispiel 11: (Vergleich)

Die Synthese wurde in einem gereinigten und getrockneten 1-1-Rührautoklaven durchgeführt. Es wurden 80 g propoxyliertes Glyzerin mit einem Molekulargewicht von 400 g/mol in den Rührkessel gegeben und mit 250 ppm des Katalysators aus Beispiel 3 versetzt. Der Kesselinhalt wurde mit Stickstoff inertisiert und insgesamt 1 Stunde bei 125°C im Vakuum behandelt. Bei 115°C wurde erst 749 g Propylenoxid und anschließend 118 g Ethylenoxid zudosiert. Es wurde weitere 15 min gerührt und bei 105°C und 9 mbar entgast. Die Aufarbeitung des Produkts erfolgte durch Filtration. Das Polyol war trüb.
Hydroxylzahl: 34,8 mg KOH/g;
Viskosität bei 75°C: 95,9 mPas
Gehalt an primären Hydroxylgruppen: 11 %
D: 1,27

### Beispiel 12: (Vergleich)

Die Synthese wurde in einem gereinigten und getrockneten 1-1-Rührautoklaven durchgeführt. Es wurden 80g propoxyliertes Glyzerin mit einem Molekulargewicht von 400 g/mol in den Rührkessel gegeben und mit 250 ppm des Katalysators aus Beispiel 3 versetzt. Der Kesselinhalt wurde mit Stickstoff inertisiert und insgesamt 1 Stunde bei 125°C im Vakuum behandelt. Bei 115°C wurde ein Gemisch aus 749 g Propylenoxid und 118 g Ethylenoxid zudosiert. Es wurde weitere 15 min gerührt und bei 105°C und 6 mbar entgast. Die Aufarbeitung des Produkts erfolgte durch Filtration. Das Polyol war trüb.
Hydroxylzahl: 35,5 mg KOH/g;
Viskosität bei 25°C: 919 mPas
Gehalt an primären Hydroxylgruppen: 10 %
D: 1,34

Die Bestimmung des Gehaltes an primären Hydroxylgruppen wurde durchgeführt, indem die Hydroxylgruppen mit Trichloracetylisocyanat umgesetzt wurden und der so behandelte Polyetheralkohol mittels H-NMR vermessen wird. Dabei zeigen die umgesetzten primären und sekundären Hydroxylgruppen unterschiedliche Peaks.

## Patentansprüche

1. Verfahren zur Herstellung von Polyetheralkoholen durch katalytische Anlagerung von mindestens zwei Alkylenoxiden an H-funktionelle Startsubstanzen, **dadurch gekennzeichnet, daß** als Katalysator mindestens eine Multimetallcyanidverbindung eingesetzt und im Verlaufe der Anlagerung der Alkylenoxide an die Startsubstanz mindestens ein Oxyalkylenblock eingebaut wird, bei dem eine gemeinsame Dosierung von mindestens zwei Alkylenoxiden erfolgt, wobei während der gemeinsamen Dosierung das Mengenverhältnis der Alkylenoxide zueinander im Gemisch verändert wird.

2. Verfahren nach Anspruch 1, **dadurch gekennzeichnet, daß** der Oxyalkylenblock, bei dem während der gemeinsamen Dosierung das Mengenverhältnis der Alkylenoxide zueinander im Gemisch verändert wird, aus zwei Alkylenoxiden besteht.

3. Verfahren nach einem der Ansprüche 1 oder 2, **dadurch gekennzeichnet, daß** die Änderung des Mengenverhältnisses der Alkylenoxide zueinander im Gemisch linear erfolgt.

4. Verfahren nach einem der Ansprüche 1 bis 3, **dadurch gekennzeichnet, daß** die Änderung des Mengenverhältnisses der Alkylenoxide zueinander im Gemisch nicht linear erfolgt.

5. Verfahren nach einem der Ansprüche 1 bis 2, **dadurch gekennzeichnet, daß** der Oxyalkylenblock, bei dem eine gemeinsame Dosierung von mindestens zwei Alkylenoxiden erfolgt, wobei während der gemeinsamen Dosierung das Mengenverhältnis der Alkylenoxide zueinander im Gemisch verändert wird, die gesamte Polyetherkette umfaßt.

6. Verfahren nach einem der Ansprüche 1 bis 2, **dadurch gekennzeichnet, daß** der Oxyalkylenblock, bei dem eine gemeinsame Dosierung von mindestens zwei Alkylenoxiden erfolgt, wobei während der gemeinsamen Dosierung das Mengenverhältnis der Alkylenoxide zueinander im Gemisch verändert wird, am Kettenanfang der Polyetherkette eingebaut wird.

7. Verfahren nach einem der Ansprüche 1 bis 2, **dadurch gekennzeichnet, daß** der Oxyalkylenblock, bei dem eine gemeinsame Dosierung von mindestens zwei Alkylenoxiden erfolgt, wobei während der gemeinsamen Dosierung das Mengenverhältnis der Alkylenoxide zueinander im Gemisch verändert wird, am Kettenende der Polyetherkette eingebaut wird.

8. Verfahren nach einem der Ansprüche 1 bis 2, **dadurch gekennzeichnet, daß** der Oxyalkylenblock, bei dem eine gemeinsame Dosierung von mindestens zwei Alkylenoxiden erfolgt, wobei während der gemeinsamen Dosierung das Mengenverhältnis der Alkylenoxide zueinander im Gemisch verändert wird, in der Mitte der Polyetherkette eingebaut wird.

9. Verfahren nach einem der Ansprüche 1 bis 8, **dadurch gekennzeichnet, daß** vor und/oder nach dem Oxyalkylenblock, bei dem eine gemeinsame Dosierung von mindestens zwei Alkylenoxiden erfolgt, wobei während der gemeinsamen Dosierung das Mengenverhältnis der Alkylenoxide zueinander im Gemisch verändert wird, mindestens ein Block eingebaut wird, der nur aus einem Alklylenoxid oder aus einem Gemisch aus mindestens zwei Alkylenoxiden, deren Mengenverhältnis zueinander nicht verändert wird, eingebaut wird.

10. Verfahren nach einem der Ansprüche 1 bis 9, **dadurch gekennzeichnet, daß** als Alkylenoxide zum Aufbau des Oxyalkylenblock, bei dem eine gemeinsame Dosierung von mindestens zwei Alkylenoxiden erfolgt, wobei während der gemeinsamen Dosierung das Mengenverhältnis der Alkylenoxide zueinander im Gemisch verändert wird, Ethylenoxid und Propylenoxid eingesetzt werden.

11. Verfahren nach einem der Ansprüche 1 bis 10, **dadurch gekennzeichnet, daß** als Katalysatoren zur Anlagerung der Alkylenoxide Multimetallcyanidverbindungen eingesetzt werden.

12. Polyetheralkohole, herstellbar nach einem der Ansprüche 1 bis 11.

13. Verwendung der Polyetheralkohole nach Anspruch 12 zur Herstellung von Polyurethanen.

14. Verfahren zur Herstellung von Polyurethanen durch Umsetzung von Polyisocyanaten mit Verbindungen mit mindestens zwei mit Isocyanatgruppen reaktiven Wasserstoffatomen, **dadurch gekennzeichnet, daß** als Verbindungen mit mindestens zwei mit Isocyanatgruppen reaktiven Wasserstoffatomen Polyetheralkohole nach Anspruch 12 eingesetzt werden.

## Claims

1. A process for preparing polyether alcohols by catalytic addition of at least two alkylene oxides onto H-functional initiator substances, wherein at least one multimetal cyanide compound is used as catalyst and the addition of the alkylene oxides onto the initiator substance includes incorporation of at least one oxyalkylene block during whose formation at least two alkylene oxides are metered in together and the ratio of the alkylene oxides to one another in the mixture is changed during the joint introduction.

2. A process as claimed in claim 1, wherein the oxyalkylene block during whose formation the ratio of the alkylene oxides to one another in the mixture is changed during the joint introduction consists of two alkylene oxides.

3. A process as claimed in claim 1 or 2, wherein the ratio of the alkylene oxides to one another in the mixture is changed linearly.

4. A process as claimed in any of claims 1 to 3, wherein the ratio of the alkylene oxides to one another in the mixture is changed nonlinearly.

5. A process as claimed in claim 1 or 2, wherein the oxyalkylene block during whose formation at least two alkylene oxides are metered in together and the ratio of the alkylene oxides to one another in the mixture is changed during the joint introduction encompasses the entire polyether chain.

6. A process as claimed in claim 1 or 2, wherein the oxyalkylene block during whose formation at least two alkylene oxides are metered in together and the ratio of the alkylene oxides to one another in the mixture is changed during the joint introduction is incorporated at the beginning of the polyether chain.

7. A process as claimed in claim 1 or 2, wherein the oxyalkylene block during whose formation at least two alkylene oxides are metered in together and the ratio of the alkylene oxides to one another in the mixture is changed during the joint introduction is incorporated at the end of the polyether chain.

8. A process as claimed in claim 1 or 2, wherein the oxyalkylene block during whose formation at least two alkylene oxides are metered in together and the ratio of the alkylene oxides to one another in the mixture is changed during the joint introduction is incorporated in the middle of the polyether chain.

9. A process as claimed in any of claims 1 to 8, wherein at least one block made up of only alkylene oxide or a mixture of at least two alkylene oxides whose molar ratio to one another is not changed is incorporated before and/or after the oxyalkylene block during whose formation at least two alkylene oxides are metered in together and the ratio of the alkylene oxides to one another in the mixture is changed during the joint introduction.

10. A process as claimed in any of claims 1 to 9, wherein the alkylene oxides used to form the oxyalkylene block during whose formation at least two alkylene oxides are metered in together and the ratio of the alkylene oxides to one another in the mixture is changed during the joint introduction are ethylene oxide and propylene oxide.

11. A process as claimed in any of claims 1 to 10, wherein the catalysts used for the molecular addition of the alkylene oxides are multimetal cyanide compounds.

12. A polyether alcohol which can be prepared as claimed in any of claims 1 to 11.

13. The use of a polyether alcohol as claimed in claim 12 for producing polyurethanes.

14. A process for producing polyurethanes by reacting polyisocyanates with compounds having at least two hydrogen atoms which are reactive toward isocyanate groups, wherein polyether alcohols as claimed in claim 12 are used as compounds having at least two hydrogen atoms which are reactive toward isocyanate groups.

## Revendications

1. Procédé de préparation de polyétheralcools par fixation catalytique d'au moins deux oxydes d'alkylène sur des substances de départ à fonctions H, **caractérisé en ce qu'**on utilise comme catalyseur au moins un composé de cyanure multimétallique et **en ce qu'**on intègre, au cours de la fixation des oxydes d'alkylène à la substance de départ, au moins une séquence oxyalkylène, dans lequel on procède à un dosage commun d'au moins deux oxydes d'alkylène, où au cours du dosage commun le rapport quantitatif des oxydes d'alkylène entre eux dans le mélange est modifié.

2. Procédé selon la revendication 1, **caractérisé en ce que** la séquence oxyalkylène, dans laquelle on modifie, au cours du dosage commun, le rapport quantitatif des oxydes d'alkylène entre eux dans le mélange, se compose de deux oxydes d'alkylène.

3. Procédé selon l'une des revendications 1 ou 2, **caractérisé en ce que** la modification du rapport quantitatif des oxydes d'alkylène entre eux dans le mélange s'effectue de façon linéaire.

4. Procédé selon l'une des revendications 1 à 3, **caractérisé en ce que** la modification du rapport quantitatif des oxydes d'alkylène entre eux dans le mélange s'effectue de façon non linéaire.

5. Procédé selon l'une des revendications 1 à 2, **caractérisé en ce que** la séquence oxyalkylène dans laquelle est effectué un dosage commun d'au moins deux oxydes d'alkylène, où au cours du dosage commun le rapport quantitatif des oxydes d'alkylène entre eux dans le mélange est modifié, comprend l'ensemble de la chaîne polyéther.

6. Procédé selon l'une des revendications 1 à 2, **caractérisé en ce que** la séquence oxyalkylène dans laquelle est effectué un dosage commun d'au moins deux oxydes d'alkylène, où au cours du dosage commun le rapport quantitatif des oxydes d'alkylène entre eux dans le mélange est modifié, est intégrée en début de chaîne dans la chaîne polyéther.

7. Procédé selon l'une des revendications 1 à 2, **caractérisé en ce que** la séquence oxyalkylène dans laquelle est effectué un dosage commun d'au moins deux oxydes d'alkylène, où au cours du dosage commun le rapport quantitatif des oxydes d'alkylène entre eux dans le mélange est modifié, est intégrée en fin de chaîne dans la chaîne polyéther.

8. Procédé selon l'une des revendications 1 à 2, **caractérisé en ce que** la séquence oxyalkylène dans laquelle est effectué un dosage commun d'au moins deux oxydes d'alkylène, où au cours du dosage commun le rapport quantitatif des oxydes d'alkylène entre eux dans le mélange est modifié, est intégrée dans le milieu de la chaîne polyéther.

9. Procédé selon l'une des revendications 1 à 8, **caractérisé en ce qu'**avant et/ou après la séquence oxyalkylène dans laquelle est effectué un dosage commun d'au moins deux oxydes d'alkylène, où au cours du dosage commun le rapport quantitatif des oxydes d'alkylène entre eux dans le mélange est modifié, est intégrée au moins une séquence qui se compose seulement d'un oxyde d'alkylène ou d'un mélange d'au moins deux oxydes d'alkylène dont le rapport quantitatif entre eux n'est pas modifié.

10. Procédé selon l'une des revendications 1 à 9, **caractérisé en ce qu'**on utilise l'oxyde d'éthylène et l'oxyde de propylène comme oxydes d'alkylène pour la constitution de la séquence oxyalkylène dans laquelle est effectué un dosage commun d'au moins deux oxydes d'alkylène, où au cours du dosage commun le rapport quantitatif des oxydes d'alkylène entre eux dans le mélange est modifié.

11. Procédé selon l'une des revendications 1 à 10, **caractérisé en ce qu'**on utilise comme catalyseurs, pour la fixation des oxydes d'alkylène, des composés de cyanures multimétalliques.

12. Polyétheralcools que l'on peut préparer selon l'une des revendications 1 à 11.

13. Utilisation des polyétheralcools selon la revendication 12 pour la préparation de polyuréthanes.

14. Procédé de préparation de polyuréthanes par réaction de polyisocyanates avec des composés comportant au moins deux atomes d'hydrogène réactifs avec des groupes isocyanate, **caractérisé en ce qu'**on utilise, comme composés comportant au moins deux atomes d'hydrogène réactifs avec des groupes isocyanate, des polyétheralcools selon la revendication 12.
